# EUROPEAN PATENT APPLICATION

(11) **EP 4 535 052 A1**
(43) Date of publication of application: **09.04.2025**
(21) Application number: 23816160.8
(22) Date of filing: 01.06.2023
(51) Int. Cl.: G02B 6/255

(54) **FUSION SPLICING DEVICE AND FUSION SPLICING METHOD**

(30) Priority: 03.06.2022 JP 2022090670
(71) Applicant: SUMITOMO ELECTRIC INDUSTRIES, LTD., Osaka-shi, Osaka 541-0041 (JP)
(72) Inventor: KIMURA Akinori, Osaka-shi, Osaka 541-0041 (JP); ENDO Soichi, Osaka-shi, Osaka 541-0041 (JP); MOURI Shintaro, Osaka-shi, Osaka 541-0041 (JP)
(74) Representative: Müller-Boré & Partner Patentanwälte PartG mbB
(86) International application number: PCT/JP2023/020532
(87) International publication number: WO 2023/234403

(57) **Abstract**

A fusion splicing device (1A) comprises a first retention part (11), a second retention part (12), a light source (30), a light detection part (40), and a heating part (2). The first retention part (11) makes it possible, while retaining a first optical fiber (F1), to change the rotational angle of an end surface (F1a) of the first optical fiber around a center axis line. The second retention part (12) makes it possible, while retaining a second optical fiber (F2), to change the rotational angle of an end surface (F2a) of the second optical fiber around a center axis line. The light source (30) is configured so as to be able to change the center wavelength of a light while shining the light on a resin sheath (RS) of the first optical fiber (F1). The light detection part (40) detects the intensity of light that leaks through a resin sheath (RS) of the second optical fiber (F2) while the end surfaces of the first optical fiber (F1) and the second optical fiber (F2) are adjacent to one another. The heating part (40) fuses the end surfaces of the first optical fiber (F1) and the second optical fiber (F2) while the same are adjacent to one another.

## Description

### Technical Field

The present disclosure relates to a fusion splicing apparatus and a method of fusion splicing. This application claims priority based on Japanese Patent Application No. 2022-090670 filed on June 3, 2022, and the entire contents of the Japanese patent application are incorporated herein by reference.

### Background Art

Patent literature 1 discloses a method of splicing multi-core optical fibers. In this splicing method, splicing end faces of the first and second multi-core optical fibers are opposed to each other so that the axes of the first and second multi-core optical fibers coincide with each other. Test light is made incident on a side of the first multi-core optical fiber to propagate through a cladding. The axial rotation adjustments of the first and second multi-core optical fibers are performed based on the test light detected from the second multi-core optical fiber.

Patent literature 2 discloses a method of splicing a first optical fiber and a second optical fiber which is a multi-core optical fiber. The method includes a facing step, a bending step, an incidence step, a measurement step, an alignment step, and a splicing step. In the facing step, end faces of the two optical fibers are opposed to each other with the center axes of the two optical fibers being parallel to each other. In the bending step, a part of the second optical fiber is bent. In the incidence step, light is made incident on a core from one end of the first optical fiber, and light emitted from the other end is made incident on the second optical fiber. In the measurement step, intensity of light emitted from the bent portion of the second optical fiber is measured. In the alignment step, at least one of the two optical fibers is moved or rotated so that the intensity of light is increased while the center axes of both optical fibers are kept parallel to each other. In the splicing step, the end portions are spliced to each other by changing the distance between the two optical fibers while maintaining the positional relationship between the two optical fibers in which the intensity of light is maximized.

Patent literature 3 discloses a method of fusion splicing end faces of a pair of optical fibers. In this method, images of the end faces of the optical fibers are captured from the front using an image capturing means disposed to face the end faces of the optical fibers. The end face of the optical fiber having a chipping or a hackle detected by a detection means is discharged by a discharge means. Thereafter, the end faces of the optical fibers are fusion-spliced.

### Citation List

### Patent Literature

Patent literature 1: Japanese Unexamined Patent Application Publication No. 2017-21190
Patent literature 2: Japanese Unexamined Patent Application Publication No. 2015-4762
Patent literature 3: WO 2013/077002

### Summary of Invention

### [Technical Problem to be solved by Invention]

As optical fibers that require adjustment of the rotation angle about the center axis at the time of fusion splicing, for example, there are a multi-core optical fiber and a polarization maintaining fiber. When the optical fibers requiring adjustment of the rotation angles are fusion-spliced, for example, any one of the following methods may be employed. In one method, light is made incident on a side surface of one optical fiber, and intensity of light leaking from a side surface of the other optical fiber is detected. Then, a relative rotation angle between the optical fibers is adjusted based on the intensity. In another method, an end face of each of optical fibers is observed while light is made incident on a side surface of each of optical fibers, and the rotation angle of each of optical fibers is individually adjusted. When the optical fibers are fusion-spliced, a coating resin is removed from a tip portion including an end face to be spliced of each optical fiber, and a glass part including a core and a cladding is exposed. As a configuration for making light incident on the side surface of the optical fiber, there are a configuration in which light is made incident on a side surface of a glass part exposed from a resin sheath and a configuration in which light is made incident on a side surface of a resin sheath. In the fusion splicing apparatus, any of these configurations is appropriately selected.

When light is incident on the side surface of the resin sheath, the following problems may occur. In general, a coloring material (for example, a pigment) for identifying the type of optical fiber or the like is mixed in the resin sheath. Alternatively, in order to improve the appearance of the optical fiber, particles for diffusing light are mixed in the resin sheath. These coloring materials and particles absorb or scatter light incident on the resin sheath, and prevent the light from passing through the resin sheath and reaching the glass part. Thus, there is a case where intensity of light leaking from the side surface of the other optical fiber or the brightness of an observed image at the end surface of the optical fiber cannot be obtained by an amount necessary for the adjustment of the rotation angle. In this case, it is difficult to adjust the rotation angle.

An object of the present disclosure is to provide a fusion splicing apparatus and a method of fusion splicing that can make it easy for light incident on a resin sheath to pass through the resin sheath and reach a glass part when the light is incident on a side surface of the resin sheath to adjust a relative rotation angle between optical fibers.

### [Solution to Problem]

A fusion splicing apparatus according to an aspect of the present disclosure includes a first holding portion, a second holding portion, a light source, a photodetector, and a heater. The first holding portion is configured to allow variation of a rotation angle of an end surface of a first optical fiber about a center axis line of the first optical fiber in a state in which the first holding portion holds the first optical fiber. The first optical fiber includes a glass part and a resin sheath surrounding an outer periphery of the glass part, and the glass part includes one or a plurality of cores and a cladding surrounding the one or plurality of cores. In the first optical fiber, a tip portion of the glass part is exposed from the resin sheath, and the tip portion includes the end surface. The second holding portion is configured to allow variation of a rotation angle of an end surface of a second optical fiber about a center axis line of the second optical fiber in a state in which the second holding portion holds the second optical fiber. The second optical fiber includes a glass part and a resin sheath surrounding an outer periphery of the glass part, and the glass part includes one or a plurality of cores and a cladding surrounding the one or plurality of cores. In the second optical fiber, a tip portion of the glass part is exposed from the resin sheath, and the tip portion includes the end surface. The light source is configured to irradiate the resin sheath of the first optical fiber with light and configured such that the light source has one or both of a feature in which a center wavelength of the light is variable and a feature in which a bandwidth of a wavelength of the light is 100 nm or more. The photodetector is configured to detect intensity of the light leaking from the second optical fiber by passing through the resin sheath in a state in which the end surface of the first optical fiber and the end surface of the second optical fiber are close to each other. The heater is configured to heat the end surface of the first optical fiber and the end surface of the second optical fiber to melt the end surface of the first optical fiber and the end surface of the second optical fiber in a state in which the end surface of the first optical fiber and the end surface of the second optical fiber are brought close to each other.

A method of fusion splicing according to an embodiment of the present disclosure includes: preparing a first optical fiber and a second optical fiber each including a glass part and a resin sheath surrounding an outer periphery of the glass part, the glass part including one or a plurality of cores and a cladding surrounding the one or plurality of cores, the glass part including a tip portion exposed from the resin sheath, the tip portion including an end surface; bringing the end surface of the first optical fiber and the end surface of the second optical fiber close to each other; irradiating the resin sheath of the first optical fiber with light by using a light source configured such that the light source has one or both of a feature in which a center wavelength of output light is variable and a feature in which a wavelength bandwidth of the output light is 100 nm or more; detecting intensity of the light leaking from the second optical fiber by passing through the resin sheath; adjusting a relative rotation angle between the first optical fiber and the second optical fiber based on intensity of the light detected in the detecting; and heating and melting the end surface of the first optical fiber and the end surface of the second optical fiber.

### [Advantageous Effects of Invention]

According to the present disclosure, it is possible to provide a fusion splicing apparatus and a method of fusion splicing that can make it easy for light incident on a resin sheath to pass through the resin sheath and reach a glass part when the light is incident on a side surface of the resin sheath to adjust a relative rotation angle between optical fibers.

### Brief Description of Drawings

FIG. 1 is a diagram for explaining an outline of a fusion splicing apparatus according to a first embodiment.
FIG. 2 is a side view of a first optical fiber and a second optical fiber.
FIG. 3 is a cross-sectional view of the first optical fiber and the second optical fiber taken along section III-III shown in FIG. 2.
FIG. 4 is a diagram schematically showing a cross section along a YZ plane of a first holding portion and a second holding portion.
FIG. 5 is a diagram schematically showing a configuration example of a light source.
FIG. 6 is a diagram schematically showing another configuration example of a light source.
FIG. 7 is a flowchart showing an operation of a fusion splicing apparatus according to a first embodiment.
FIG. 8 is a diagram showing a part of a configuration of a fusion splicing apparatus according to a second embodiment.
FIG. 9 is a flowchart showing an operation of a fusion splicing apparatus according to a second embodiment.

### Description of Embodiments

### [Description of Embodiments of Present Disclosure]

First, the contents of embodiments of the present disclosure will be listed and explained.
[1] A fusion splicing apparatus according to a first aspect of the present disclosure includes a first holding portion, a second holding portion, a light source, a photodetector, and a heater. The first holding portion is configured to allow variation of a rotation angle of an end surface of a first optical fiber about a center axis line of the first optical fiber in a state in which the first holding portion holds the first optical fiber. The first optical fiber includes a glass part and a resin sheath surrounding an outer periphery of the glass part, and the glass part includes one or a plurality of cores and a cladding surrounding the one or plurality of cores. In the first optical fiber, a tip portion of the glass part is exposed from the resin sheath, and the tip portion includes the end surface. The second holding portion is configured to allow variation of a rotation angle of an end surface of a second optical fiber about a center axis line of the second optical fiber in a state in which the second holding portion holds the second optical fiber. The second optical fiber includes a glass part and a resin sheath surrounding an outer periphery of the glass part, and the glass part includes one or a plurality of cores and a cladding surrounding the one or plurality of cores. In the second optical fiber, a tip portion of the glass part is exposed from the resin sheath, and the tip portion includes the end surface. The light source is configured to irradiate the resin sheath of the first optical fiber with light. The light source is configured such that the light source has one or both of a feature in which a center wavelength of the light is variable and a feature in which a bandwidth of a wavelength of the light is 100 nm or more. The photodetector is configured to detect intensity of the light leaking from the second optical fiber by passing through the resin sheath in a state in which the end surface of the first optical fiber and the end surface of the second optical fiber are close to each other. The heater is configured to heat the end surface of the first optical fiber and the end surface of the second optical fiber to melt the end surface of the first optical fiber and the end surface of the second optical fiber in a state in which the end surface of the first optical fiber and the end surface of the second optical fiber are brought close to each other.

In this fusion splicing apparatus, the light source that irradiate the resin sheath of the first optical fiber with light is configured such that the light source has one or both of a feature in which a center wavelength of the light is variable and a feature in which a bandwidth of a wavelength of the light is 100 nm or more. As described above, the coloring material and the particles contained in the resin sheath absorb or scatter light incident on the resin sheath, and the magnitude of the absorption and scattering depends on the wavelength of the light. According to this fusion splicing apparatus, by selecting a wavelength at which absorption and scattering in the resin sheath are small and irradiating the resin sheath with light of the wavelength, the light easily passes through the resin sheath and reaches the glass part. Thus, intensity of light leaking from the second optical fiber by passing through the resin sheath can be increased, and the rotation angle can be suitably adjusted. Alternatively, the light source is configured such that the wavelength bandwidth of light is 100 nm or more, and thus, by using such broadband light, the rotation angles of a plurality of types of optical fibers each having different absorbing characteristics and scattering characteristics of the resin sheath can be adjusted without changing wavelength of light. Thus, the frequency of changing the wavelength of light can be reduced, and the time and effort of an operator can be reduced. In addition, by using such broadband light whose bandwidth is 100 nm or more, at least one of the wavelength components included in the band, typically, the wavelength component that is absorbed and scattered the least in the band, easily reaches the glass part through the resin sheath. Thus, intensity of light leaking from the second optical fiber by passing through the resin sheath can be increased, and the rotation angle can be suitably adjusted.

[2] In the fusion splicing apparatus of the above [1], the photodetector may be configured such that a center wavelength of a band for which the photodetector has sensitivity is variable. In this case, light can be detected with optimal sensitivity corresponding to the wavelength of light, and the light detection efficiency can be increased, allowing the rotation angle to be adjusted more accurately.

[3] A fusion splicing apparatus according to a second aspect of the present disclosure includes a first holding portion, a second holding portion, a first light source, a second light source, an imaging unit, and a heater. The first holding portion is configured to allow variation of a rotation angle of an end surface of a first optical fiber about a center axis line of the first optical fiber in a state in which the first holding portion holds the first optical fiber. The first optical fiber includes a glass part and a resin sheath surrounding an outer periphery of the glass part, the glass part including one or a plurality of cores and a cladding surrounding the one or plurality of cores. In the first optical fiber, the glass part including a tip portion is exposed from the resin sheath, the tip portion including the end surface. The second holding portion is configured to allow variation of a rotation angle of an end surface of a second optical fiber about a center axis line of the second optical fiber in a state in which the second holding portion holds the second optical fiber. The second optical fiber includes a glass part and a resin sheath surrounding an outer periphery of the glass part, the glass part including one or a plurality of cores and a cladding surrounding the one or plurality of cores. In the second optical fiber, the glass part including a tip portion is exposed from the resin sheath, the tip portion including the end surface. The first light source is configured to irradiate the resin sheath of the first optical fiber with first light. The first light source is configured such that the first light source has one or both of a feature in which a center wavelength of the first light is variable and a feature in which a bandwidth of a wavelength of the first light is 100 nm or more. The second light source is configured to irradiate the resin sheath of the second optical fiber with second light. The second light source is configured such that the second light source has one or both of a feature in which a center wavelength of the second light is variable and a feature in which a bandwidth of a wavelength of the second light is 100 nm or more. The imaging unit is configured to obtain an observed image of each of the end surface of the first optical fiber and the end surface of the second optical fiber. The heater is configured to heat the end surface of the first optical fiber and the end surface of the second optical fiber to melt the end surface of the first optical fiber and the end surface of the second optical fiber in a state in which the end surface of the first optical fiber and the end surface of the second optical fiber are brought close to each other.

In this fusion splicing apparatus, the first light source that irradiate the resin sheath of the first optical fiber with light is configured such that the light source has one or both of a feature in which a center wavelength of the first light is variable and a feature in which a bandwidth of a wavelength of the first light is 100 nm or more. In addition, the second light source that irradiate the resin sheath of the second optical fiber with light is configured such that the light source has one or both of a feature in which a center wavelength of the second light is variable and a feature in which a bandwidth of a wavelength of the second light is 100 nm or more. As described above, the coloring material and the particles contained in the resin sheath absorb or scatter light incident on the resin sheath, and the magnitude of the absorption and scattering depends on the wavelength of the light. According to this fusion splicing apparatus, by selecting a wavelength at which absorption and scattering in each resin sheath are small and irradiating the resin sheaths of the first optical fiber and the second optical fiber with the first light and the second light of the wavelength, respectively, the first light and the second light easily pass through the resin sheaths and reach the glass parts. Thus, the observed images of the end faces of the first optical fiber and the second optical fiber can be made brighter, and the rotation angles can be suitably adjusted. Alternatively, the first light source and the second light source are configured such that the wavelength bandwidth of each of the first light and the second light is 100 nm or more, and thus, by using such broadband lights, the rotation angles of the plurality of types of optical fibers having different absorbing characteristics and scattering characteristics of the resin sheaths can be adjusted using lights having the same wavelength. Thus, the frequency of changing the wavelengths of the first light source and the second light source can be reduced, and the time and effort of the operator can be reduced. In addition, by using the first light and the second light each having a broad band whose bandwidth is 100 nm or more, at least one of the wavelength components included in the band, typically, the wavelength component that is absorbed and scattered the least in the band, easily reaches the glass part through the resin sheath. Thus, the observed images of the end faces of the first optical fiber and the second optical fiber can be made brighter, and the rotation angles can be suitably adjusted.

[4] In the fusion splicing apparatus of the above [3], the imaging unit may be configured such that a center wavelength of a band for which the imaging unit has sensitivity is variable. In this case, the first light and the second light can be imaged with optimal sensitivity corresponding to the wavelengths of the first light and the second light, and the observed images of the end faces of the first optical fiber and the second optical fiber can be made brighter to more accurately adjust the rotation angles.

[5] In the fusion splicing apparatus of the above [1] or [2], the light source may be configured such that intensity of the light with which the resin sheath of the first optical fiber is irradiated is variable. In this case, intensity of light can be easily adjusted, for example, such that intensity of light is decreased when the intensity of light incident on the photodetector exceeds the maximum light amount allowed in the photodetector, or intensity of light is increased when the intensity of light incident on the photodetector is too small. Thus, intensity of light leaking from the second optical fiber by passing through the resin sheath can be appropriately adjusted, and the rotation angle can be suitably adjusted.

[6] In the fusion splicing apparatus of the above [3] or [4], the first light source may be configured such that intensity of the first light with which the resin sheath of the first optical fiber is irradiated is variable. The second light source may be configured such that intensity of the second light with which the resin sheath of the second optical fiber is irradiated is variable. In this case, intensities of the first light and the second light can be easily adjusted, for example, such that intensities of the first light and the second light are decreased when intensities of the first light and the second light incident on the imaging unit exceed the maximum light amount allowed in the imaging unit, or intensities of the first light and the second light are increased when intensities of the first light and the second light incident on the imaging unit are too small. Thus, intensities of the first light and the second light emitted from the end faces of the first optical fiber and the second optical fiber are appropriately adjusted, the observed images of the end faces of the first optical fiber and the second optical fiber are appropriately obtained, and the rotation angles can be suitably adjusted.

[7] A method of fusion splicing according to a first aspect of the present disclosure includes: preparing a first optical fiber and a second optical fiber each including a glass part and a resin sheath surrounding an outer periphery of the glass part, the glass part including one or a plurality of cores and a cladding surrounding the one or plurality of cores, the glass part including a tip portion exposed from the resin sheath, the tip portion including an end surface; bringing the end surface of the first optical fiber and the end surface of the second optical fiber close to each other; irradiating the resin sheath of the first optical fiber with light by using a light source configured such that the light source has one or both of a feature in which a center wavelength of output light is variable and a feature in which a wavelength bandwidth of the output light is 100 nm or more; detecting intensity of the light leaking from the second optical fiber by passing through the resin sheath; adjusting a relative rotation angle between the first optical fiber and the second optical fiber based on intensity of the light detected in the detecting; and heating and melting the end surface of the first optical fiber and the end surface of the second optical fiber.

In this method of fusion splicing, the resin sheath of the first optical fiber is irradiated with light by using the light source configured such that the light source has one or both of a feature in which a center wavelength of output light is variable and a feature in which a wavelength bandwidth of the output light is 100 nm or more. According to the method of fusion splicing, for the same reason as in the fusion splicing apparatus of [1] described above, intensity of light leaking from the second optical fiber by passing through the resin sheath can be increased, and the rotation angle can be suitably adjusted.

[8] In the fusion splicing apparatus of the above [7], a photodetector configured such that a center wavelength of a band for which the photodetector has sensitivity is variable may be used in the detecting to detect intensity of the light. In this case, light can be detected with optimal sensitivity corresponding to the wavelength of light, and the light detection efficiency can be increased, allowing the rotation angle to be adjusted more accurately.

[9] A method of fusion splicing according to a second aspect of the present disclosure includes: preparing a first optical fiber and a second optical fiber each including a glass part and a resin sheath surrounding an outer periphery of the glass part, the glass part including one or a plurality of cores and a cladding surrounding the one or plurality of cores, the glass part including a tip portion exposed from the resin sheath, the tip portion including an end surface; obtaining an observed image of the end surface of the first optical fiber while irradiating the resin sheath of the first optical fiber with first light by using a first light source configured such that the first light source has one or both of a feature in which a center wavelength of output light is variable and a feature in which a wavelength bandwidth of the output light is 100 nm or more; obtaining an observed image of the end surface of the second optical fiber while irradiating the resin sheath of the second optical fiber with second light by using a second light source configured such that the second light source has one or both of a feature in which a center wavelength of output light is variable and a feature in which a wavelength bandwidth of the output light is 100 nm or more; adjusting a relative rotation angle between the first optical fiber and the second optical fiber based on the observed image of the end surface of the first optical fiber and the observed image of the end surface of the second optical fiber; bringing the end surface of the first optical fiber and the end surface of the second optical fiber close to each other; and heating and melting the end surface of the first optical fiber and the end surface of the second optical fiber.

In this method of fusion splicing, the resin sheath of each of the first optical fiber and the second optical fiber is irradiated with first light and the second light, respectively, by using the first light source and the second light source each configured such that the first light source and the second light source each has one or both of a feature in which a center wavelength of output light is variable and a feature in which a wavelength bandwidth of the output light is 100 nm or more. According to the method of fusion splicing, for the same reason as in the fusion splicing apparatus of [3] described above, the observed images of the end faces of the first optical fiber and the second optical fiber can be made brighter, and the rotation angles can be suitably adjusted.

[10] In the method of fusion splicing of the above [9], an imaging device configured such that a center wavelength of a band for which the imaging device has sensitivity is variable may be used in each of the obtaining the observed image of the end surface of the first optical fiber and the obtaining the observed image of the end surface of the second optical fiber to obtain each of the observed image of the end surface of the first optical fiber and the observed image of the end surface of the second optical fiber. In this case, the first light and the second light can be detected with optimal sensitivity corresponding to the wavelengths of the first light and the second light, and the rotation angles can be adjusted more accurately by increasing the detection efficiencies of the first light and the second light.

[11] In the method of fusion splicing of the above [7] or [8], the light source configured such that intensity of the light with which the resin sheath of the first optical fiber is irradiated is variable may be used in the irradiating to perform irradiation with the light. In this case, intensity of light can be easily adjusted, for example, such that intensity of light is decreased when intensity of light incident on the photodetector exceeds the maximum light amount allowed in the photodetector, or intensity of light is increased when intensity of light incident on the photodetector is too small. Thus, intensity of light leaking from the second optical fiber by passing through the resin sheath can be appropriately adjusted, and the rotation angle can be suitably adjusted.

[12] In the method of fusion splicing of the above [9] or [10], the first light source configured such that intensity of the first light is variable may be used in the obtaining the observed image of the end surface of the first optical fiber to perform irradiation with the first light. The second light source configured such that intensity of the second light is variable may be used in the obtaining the observed image of the end surface of the second optical fiber to perform irradiation with the second light. In this case, intensities of the first light and the second light can be easily adjusted, for example, such that intensities of the first light and the second light are decreased when intensities of the first light and the second light incident on the imaging unit exceed the maximum light amount allowed in the imaging unit, or intensities of the first light and the second light are increased when intensities of the first light and the second light incident on the imaging unit are too small. Thus, intensities of the first light and the second light emitted from the end faces of the first optical fiber and the second optical fiber are appropriately adjusted, the observed images of the end faces of the first optical fiber and the second optical fiber are appropriately obtained, and the rotation angles can be suitably adjusted.

### [Details of Embodiments of Present Disclosure]

Specific examples of an embodiment of the present disclosure will be described below with reference to the drawings. The present disclosure is not limited to the examples, but is indicated by the appended claims, and is intended to include all modifications within the meaning and scope equivalent to the appended claims. In the following description, the same elements will be designated by the same reference numerals in the description of the drawings, and redundant description will be omitted.

### (First Embodiment)

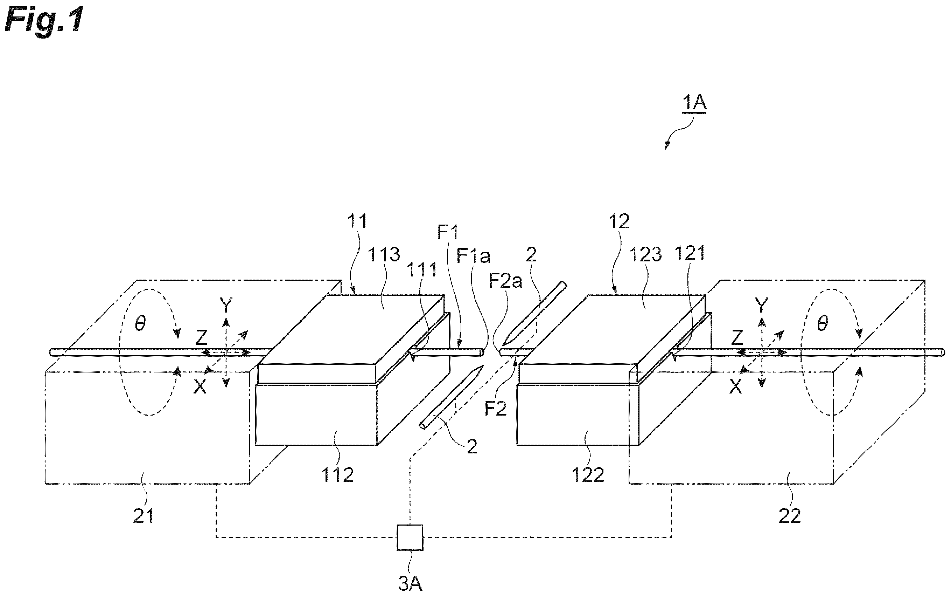

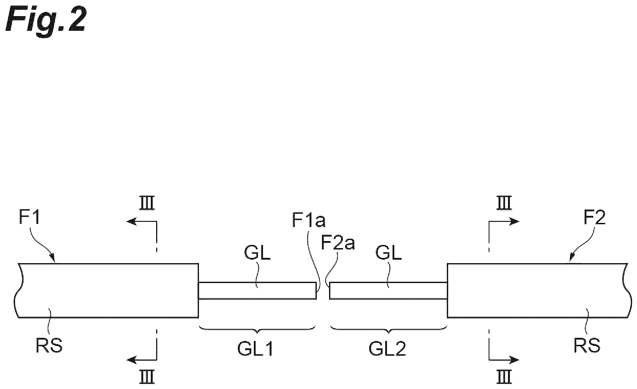

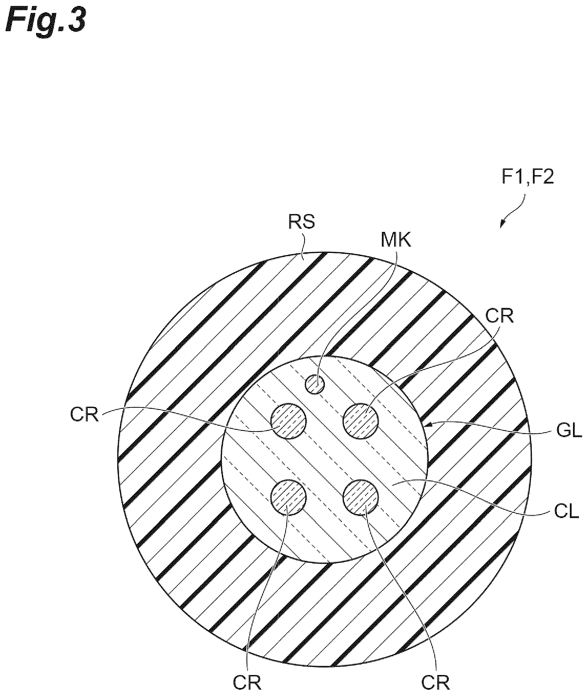

FIG. 1 is a diagram for explaining an outline of a fusion splicing apparatus 1A according to a first embodiment. FIG. 1 also shows an XYZ orthogonal coordinate system. As shown in FIG. 1, fusion splicing apparatus 1A is an apparatus that fusion-splices an end face F1a of a first optical fiber F1 and an end face F2a of a second optical fiber F2 to each other. FIG. 2 is a side view of first optical fiber F1 and second optical fiber F2. FIG. 3 is a cross-sectional view of first optical fiber F1 and second optical fiber F2 taken along section III-III shown in FIG. 2. As shown in FIG. 3, each of first optical fiber F1 and second optical fiber F2 includes a glass part GL and a resin sheath RS surrounding an outer periphery of glass part GL. Glass part GL includes one or a plurality of (four in the illustrated example) cores CR, one marker MK, and a common cladding CL surrounding cores CR and marker MK. The refractive index of core CR is larger than the refractive index of common cladding CL. Marker MK may be transparent or opaque. FIG. 3 shows a multi-core optical fiber (MCF) having a plurality of cores CR, as first optical fiber F1 and second optical fiber F2. First optical fiber F1 and second optical fiber F2 can be any optical fibers that require rotational alignment during fusion splicing, and are not limited to the multi-core optical fibers. First optical fiber F1 and second optical fiber F2 may be optical fibers each having a single core, for example, polarization maintaining fibers (PMF).

As shown in FIG. 2, in first optical fiber F1, a tip portion GL1 of glass part GL is exposed from resin sheath RS. Tip portion GL1 includes end face F1a. In second optical fiber F2, a tip portion GL2 of glass part GL is exposed from resin sheath RS. Tip portion GL2 includes end face F2a. These exposed portions are formed by removing resin sheaths RS around tip portions GL1 and GL2 before the fusion splicing operation.

Reference is again made to FIG. 1. Fusion splicing apparatus 1A includes a first holding portion 11 and a second holding portion 12. First holding portion 11 allows variations of a spatial position and a rotation angle θ, which is a rotation angle about a center axis line of first optical fiber F1, of end face F 1a of first optical fiber F1 in a state in which first holding portion 11 holds first optical fiber F1. The spatial position means a position in each of the X axis, the Y axis, and the Z axis. Second holding portion 12 allows variations of a spatial position and a rotation angle θ, which is a rotation angle about a center axis line of second optical fiber F2, of end face F2a of second optical fiber F2 in a state in which second holding portion 12 holds second optical fiber F2. First holding portion 11 and second holding portion 12 are arranged along the Z axis direction which is the center axis direction of first optical fiber F1 and second optical fiber F2. First holding portion 11 has a V-groove 111 extending along the Z axis direction. V-groove 111 accommodates a portion of first optical fiber F1 excluding tip portion GL1, that is, a portion of first optical fiber F1 having resin sheath RS, and fixes the position of first optical fiber F1 in an XY plane. First holding portion 11 holds first optical fiber F1 in a state where tip portion GL1 is protruded. Second holding portion 12 has a V-groove 121 extending along the Z axis direction. V-groove 121 accommodates a portion of second optical fiber F2 excluding tip portion GL2, that is, a portion of second optical fiber F2 having resin sheath RS, and fixes the position of second optical fiber F2 in the XY plane. Second holding portion 12 holds second optical fiber F2 in a state where tip portion GL2 is protruded.

In one embodiment, first holding portion 11 and second holding portion 12 are made of resin. First holding portion 11 includes, for example, a base 112 in which V-groove 111 is formed and on which first optical fiber F1 is placed, and a cover 113 placed on base 112. Base 112 and cover 113 are arranged, for example, along the Y axis direction intersecting the Z axis direction. Second holding portion 12 includes, for example, a base 122 on which V-groove 121 is formed and on which second optical fiber F2 is placed, and a cover 123 placed on base 122. Base 122 and cover 123 are arranged, for example, along the Y axis direction.

Fusion splicing apparatus 1A further includes a first driving portion 21 and a second driving portion 22. First driving portion 21 supports first holding portion 11 and controls the spatial position of first holding portion 11 and rotation angle θ of first holding portion 11 about the Z axis. The spatial position and rotation angle θ of end face F1a of first optical fiber F1 are controlled by first driving portion 21 controlling the spatial position and rotation angle θ of first holding portion 11. Second driving portion 22 supports second holding portion 12 and controls the spatial position of second holding portion 12 and rotation angle θ of second holding portion 12 about the Z axis. The spatial position and rotation angle θ of end face F2a of second optical fiber F2 are controlled by second driving portion 22 controlling the spatial position and rotation angle θ of second holding portion 12. First driving portion 21 and second driving portion 22 include, for example, motors.

Fusion splicing apparatus 1A further includes a pair of arc electrodes 2. The pair of arc electrodes 2 is disposed at a position where end face F1a of first optical fiber F1 faces end face F2a of second optical fiber F2. The pair of arc electrodes 2 are disposed so as to face each other along the X axis direction intersecting both of the Z axis direction and the Y axis direction. The pair of arc electrodes 2 are heaters that heats end face F1a of first optical fiber F1 and end face F2a of second optical fiber F2 by electric discharge to melt end face F1a of first optical fiber F1 and end face F2a of second optical fiber F2 in a state in which end face F1a of first optical fiber F1 and end face F2a of second optical fiber F2 are brought close to each other.

Fusion splicing apparatus 1A further includes a controller 3A. Controller 3A can be configured by, for example, a computer including a CPU and a memory. Controller 3A is electrically connected to a power source that supplies power to arc electrodes 2, and controls the discharge current and the discharge time of arc electrodes 2. Thus, fusion splicing is performed under conditions suitable for the types of first optical fiber F1 and second optical fiber F2. In addition, controller 3A controls operations of first driving portion 21 and second driving portion 22. The operations of first driving portion 21 and second driving portion 22 include the following three operations. One operation is an operation of bringing end face F1a of first optical fiber F1 and end face F2a of second optical fiber F2 close to each other. Another operation is an operation of adjusting a relative position between end face F1a and end face F2a in the XY plane (that is, axis alignment). Still another operation is an operation of adjusting a relative rotation angle θ between end face F1a and end face F2a.

The axis alignment of first optical fiber F1 and second optical fiber F2 by controller 3A is performed as follows. First, the vicinity of end face F1a and end face F2a of first optical fiber F1 and second optical fiber F2 is imaged using cameras located in lateral directions (two directions intersecting the Z axis direction and orthogonal to each other) with respect to end face F1a and end face F2a. Then, controller 3A controls first driving portion 21 and second driving portion 22 so that the center axis lines of first optical fiber F1 and second optical fiber F2 included in the observed images coincide with each other.

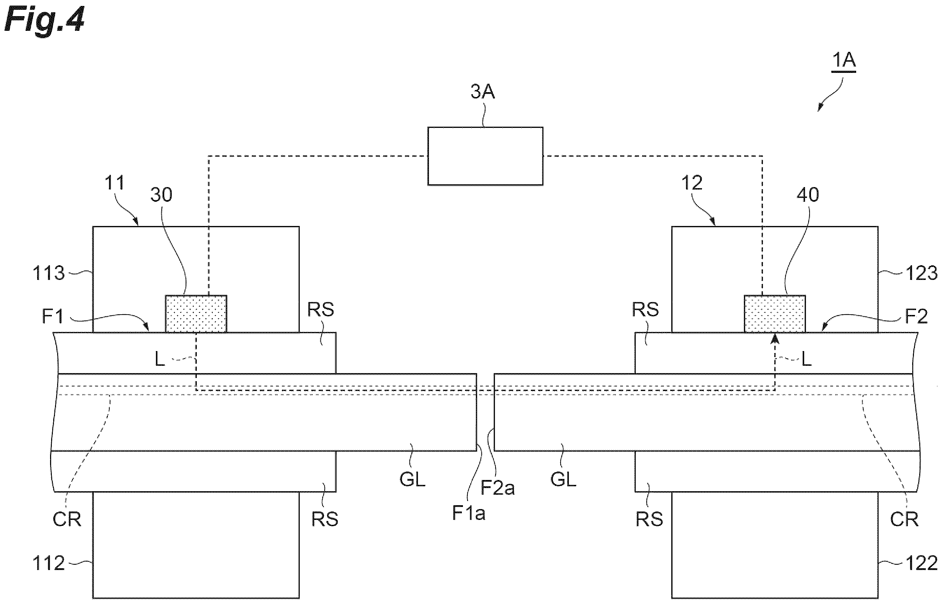

FIG. 4 is a diagram schematically showing a cross section along the YZ plane of first holding portion 11 and second holding portion 12. As shown in FIG. 4, fusion splicing apparatus 1A further includes a light source 30 and a photodetector 40. Light source 30 irradiates resin sheath RS of first optical fiber F1 with a light L. In one example, light source 30 is provided so as to be in contact with first optical fiber F1 inside first holding portion 11. Light source 30 may be provided to press resin sheath RS of first optical fiber F1. The arrangement of light source 30 is not limited thereto, and light source 30 may be provided outside first holding portion 11. Light source 30 may be disposed away from first optical fiber F1. In this case, light source 30 may cause light L to be incident on a curved portion formed by bending first optical fiber F1.

Photodetector 40 is a power meter, and detects intensity of light L leaking from the second optical fiber F2 by passing through resin sheath RS in a state in which end face F1a of first optical fiber F1 and end face F2a of second optical fiber F2 are close to each other. In one example, photodetector 40 is provided so as to be in contact with second optical fiber F2 inside second holding portion 12. The arrangement of photodetector 40 is not limited thereto, and photodetector 40 may be provided outside second holding portion 12. Photodetector 40 may be disposed away from second optical fiber F2. In this case, photodetector 40 may detect light L leaking from a curved portion formed by bending second optical fiber F2.

Light source 30 and photodetector 40 are electrically connected to controller 3A shown in FIG. 1. Controller 3A controls the output operation of light L in light source 30. In addition, controller 3A inputs a signal related to the light intensity of light L detected by photodetector 40 from photodetector 40. Light L irradiated to resin sheath RS of first optical fiber F1 passes through resin sheath RS of first optical fiber F1, enters glass part GL, and is collected in each core CR. Then, light L propagates through each core CR of first optical fiber F1, and then propagates through each core CR of second optical fiber F2. The leaked light of light L leaks through resin sheath RS of second optical fiber F2. What is detected by photodetector 40 is the leaked light L. In FIG. 4, one core CR among the plurality of cores CR is representatively shown.

In a case where the positions of cores CR of first optical fiber F1 deviate from the positions of cores CR of second optical fiber F2, light L is less likely to propagate from cores CR of first optical fiber F1 to cores CR of second optical fiber F2 as the deviation amount increases. Thus, the light intensity detected by photodetector 40 is decreased. Thus, controller 3A adjusts the relative rotation angle θ between end face F1a and end face F2a so that the light intensity detected by photodetector 40 approaches the maximum value by controlling one or both of first driving portion 21 and second driving portion 22. Thus, the positions of cores CR of first optical fiber F1 and the positions of cores CR of second optical fiber F2 can be matched with each other.

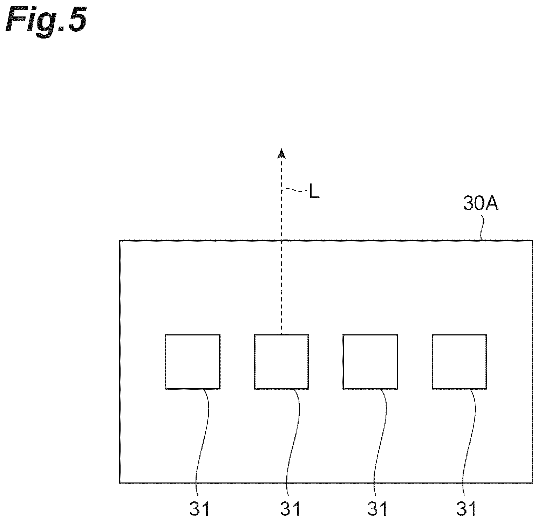

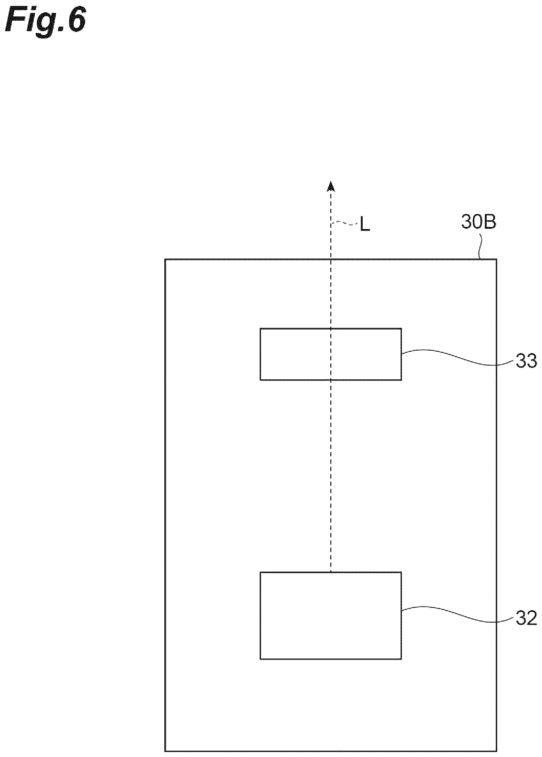

Light source 30 is configured such that a center wavelength of light L is variable. FIGS. 5 and 6 are diagrams schematically showing light sources 30A and 30B, respectively, as configuration examples of light source 30. Light source 30A shown in FIG. 5 includes a plurality of light-emitting devices 31. The center wavelengths of the light-emitting wavelength bandwidths of the plurality of light-emitting devices 31 are different from each other. The light-emitting wavelength bandwidths of the plurality of light-emitting devices 31 may or may not overlap with each other. The center wavelength of light L is selected by selectively supplying a current to any of the plurality of light-emitting devices 31. The light-emitting wavelength bandwidth of each light-emitting device 31 may be a broad band of 100 nm or more, or may be a narrow band of less than 100 nm. The light-emitting wavelength bands of the plurality of light-emitting devices 31 may be set so as to divide the wavelength band of 400-2000 nm, for example.

Light source 30B shown in FIG. 6 includes a light-emitting device 32 and a wavelength variable filter 33. Light-emitting device 32 is a device that outputs broad light having a broad band (for example, 400 nm to 2000 nm). Wavelength variable filter 33 is a band-pass filter, which receives light from light-emitting device 32 and allows only a part of wavelength band components of the light to pass through. Wavelength variable filter 33 is configured to be able to change the passing wavelength band. The center wavelength of light passing through wavelength variable filter 33, that is, light L output from light source 30B, is changed by changing the passing wavelength band of wavelength variable filter 33.

In light source 30, the center wavelength of light L may be not variable but fixed. In this case, light source 30 is configured such that the bandwidth of a wavelength of light L is 100 nm or more, for example, 1000 nm or more. In one example, light source 30 outputs broad light having a wavelength band of, for example, 400 nm to 2000 nm. In this case, the bandwidth of the wavelength of light L is 1600 nm.

Photodetector 40 may be configured such that a center wavelength of a wavelength band for which photodetector 40 has sensitivity is variable. In this case, the wavelength band for which photodetector 40 has sensitivity may be set in accordance with the wavelength band of light L output from light source 30. In one example, the center wavelength of the wavelength band for which photodetector 40 has sensitivity is set to match the center wavelength of the wavelength band of light L output from light source 30.

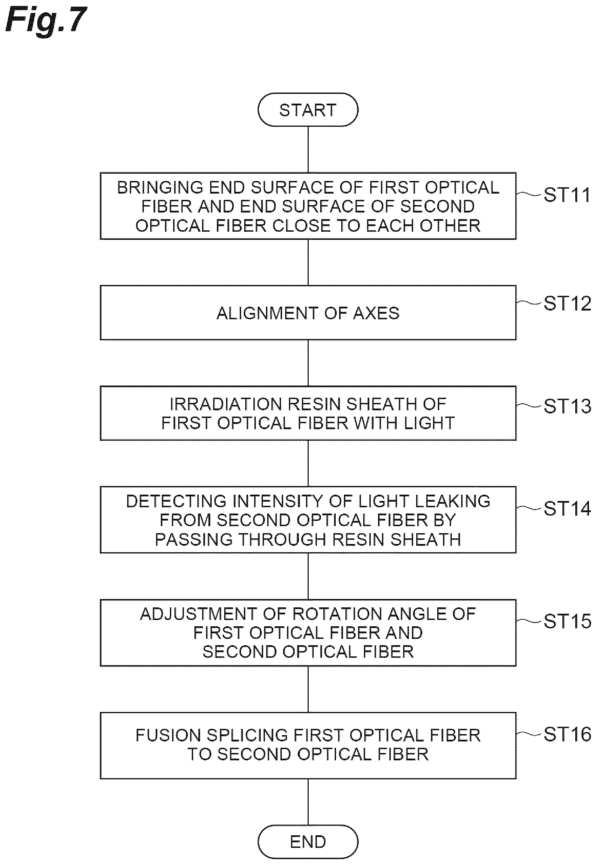

FIG. 7 is a flowchart showing an operation of fusion splicing apparatus 1A. With reference to FIG. 7, a method of fusion splicing according to the present embodiment will be described together with the operation of fusion splicing apparatus 1A. First, in step ST11, controller 3A controls first driving portion 21 and second driving portion 22 so that end face F1a of first optical fiber F1 and end face F2a of second optical fiber F2 are brought close to each other. Thus, end faces F1a and F2a face each other. However, there is a slight clearance between end faces F1a and F2a. Next, in step ST12, the axes of first optical fiber F1 and second optical fiber F2 are aligned. Specifically, the vicinity of end faces F1a and F2a of first optical fiber F1 and second optical fiber F2 is imaged by using cameras disposed laterally with respect to end faces F1a and F2a. Then, controller 3A controls first driving portion 21 and second driving portion 22 so that the center axis lines of first optical fiber F1 and second optical fiber F2 included in the observed images coincide with each other.

In the subsequent step ST13, light source 30 in which the center wavelength of output light is variable irradiates resin sheath RS of first optical fiber F1 with light L. Alternatively, in step ST13, light source 30 in which the center wavelength of the output light is fixed may irradiate resin sheath RS of first optical fiber F1 with light L having a wavelength bandwidth of 100 nm or more. Then, in step ST14, photodetector 40 detects intensity of light L leaking from the second optical fiber F2 by passing through resin sheath RS. As described above, photodetector 40 may be configured such that the center wavelength of the wavelength band for which photodetector 40 has sensitivity is variable. Then, in step ST15, controller 3A adjusts a relative rotation angle θ between first optical fiber F1 and second optical fiber F2 based on the intensity of light L detected in step ST14. At this time, controller 3A adjusts the relative rotation angle θ between end face F1a and end face F2a by controlling one or both of first driving portion 21 and second driving portion 22 so that the light intensity detected by photodetector 40 approaches the maximum value. Thereafter, in step ST16, electric discharge is performed between the pair of arc electrodes 2 to heat and melt end face F1a of first optical fiber F1 and end face F2a of second optical fiber F2, thereby splicing end face F1a and end face F2a to each other.

Effects obtained by the fusion splicing apparatus and the method of fusion splicing of the present embodiment having the above-described configuration will be described. In fusion splicing apparatus 1A of the present embodiment, light source 30 that irradiates resin sheath RS of first optical fiber F1 with light L is configured such that the center wavelength of light L is variable. In the method of fusion splicing of the present embodiment, resin sheath RS of first optical fiber F1 is irradiated with light by using light source 30 in which the center wavelength of output light is variable. As described above, the coloring material and the particles contained in resin sheath RS absorb or scatter light L incident on resin sheath RS, and the magnitude of the absorption and scattering depends on the wavelength of light L. According to fusion splicing apparatus 1A and the method of fusion splicing of the present embodiment, by selecting a wavelength at which absorption and scattering in resin sheath RS are small and irradiating resin sheath RS with light L of the wavelength, light L easily passes through resin sheath RS and reaches glass part GL. In addition, light L is likely to leak from resin sheath RS of second optical fiber F2. Thus, according to the present embodiment, intensity of light L leaking from the second optical fiber F2 by passing through resin sheath RS can be increased, and rotation angle θ can be suitably adjusted. The wavelength of light L may be automatically changed by controller 3A according to the types of first optical fiber F1 and second optical fiber F2 input before the fusion splicing. Alternatively, the wavelength of light L may be changed by an operator through an input unit such as a switch provided in fusion splicing apparatus 1A.

As described above, light source 30 may be configured such that the wavelength bandwidth of light L is 100 nm or more. By using such broadband light L, rotation angles θ of a plurality of types of optical fibers having different absorption characteristics and scattering characteristics of resin sheaths RS can be adjusted without changing wavelength of light. Thus, the frequency of changing the wavelength of light L can be reduced, and the time and effort of the operator can be reduced.

As described above, photodetector 40 may be configured such that the center wavelength of the band for which photodetector 40 has sensitivity is variable. In this case, light L can be detected with optimal sensitivity corresponding to the wavelength of light L. Thus, the detection efficiency of light L can be improved, and rotation angle θ can be adjusted more accurately.

As described above, light source 30 may be configured such that the center wavelength of light L is not variable but fixed and the bandwidth of the wavelength of light L is 100 nm or more. In step ST13 of the method of fusion splicing of the present embodiment, resin sheath RS of first optical fiber F1 may be irradiated with light L having a wavelength bandwidth of 100 nm or more by using light source 30 in which the center wavelength of light L is not variable but fixed. As described above, the coloring material and the particles contained in resin sheath RS absorb or scatter light L incident on resin sheath RS, and the magnitude of the absorption and scattering depends on the wavelength of light L. By using such broadband light L whose bandwidth is 100 nm or more, at least one of the wavelength components included in the band, typically, the wavelength component that is absorbed and scattered the least in the band, easily reaches glass part GL through resin sheath RS. Thus, intensity of light L leaking from the second optical fiber F2 by passing through resin sheath RS can be increased, and rotation angle θ can be suitably adjusted.

In the present embodiment, light source 30 may be configured such that intensity of light L with which resin sheath RS of first optical fiber F1 is irradiated is variable. In this case, intensity of light L can be easily adjusted, for example, such that intensity of light L is decreased when intensity of light L incident on photodetector 40 exceeds the maximum light amount allowed in photodetector 40, or intensity of light L is increased when intensity of light L incident on photodetector 40 is too small. Thus, intensity of light L leaking from the second optical fiber F2 by passing through resin sheath RS can be appropriately adjusted, and rotation angle θ can be suitably adjusted. Intensity of light L may be automatically changed by controller 3A based on intensity of light L incident on photodetector 40. Alternatively, intensity of light L may be changed by the operator through an input unit such as a switch provided in fusion splicing apparatus 1A.

### (Second Embodiment)

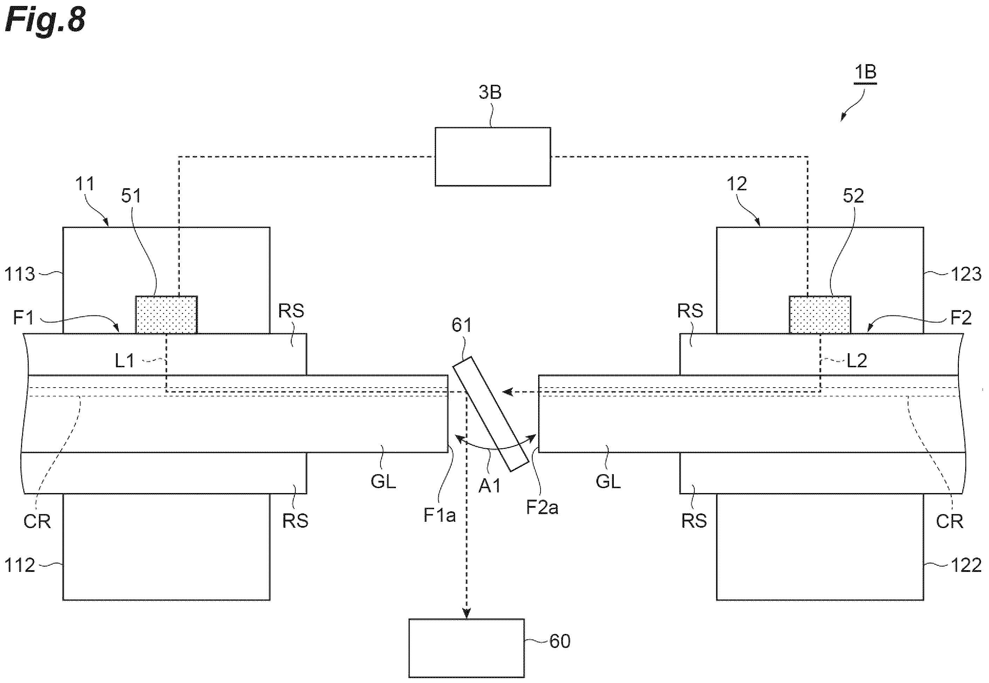

FIG. 8 is a diagram showing a part of a configuration of a fusion splicing apparatus 1B according to a second embodiment, and schematically shows a cross section of first holding portion 11 and second holding portion 12 along the YZ plane. Fusion splicing apparatus 1B of the present embodiment is an apparatus that fusion-splices end face F1a of first optical fiber F1 and end face F2a of second optical fiber F2 to each other. Fusion splicing apparatus 1B includes first holding portion 11, second holding portion 12, first driving portion 21, second driving portion 22, and a pair of arc electrodes 2, as in the first embodiment. As shown in FIG. 8, fusion splicing apparatus 1B of the present embodiment includes a first light source 51, a second light source 52, an imaging unit 60, a mirror 61, and a controller 3B, instead of light source 30, photodetector 40, and controller 3A of the first embodiment.

Controller 3B may be configured by, for example, a computer including a CPU and a memory. Controller 3B is electrically connected to a power source that supplies power to arc electrodes 2. Controller 3B controls the discharge current and the discharge time of arc electrodes 2. Thus, fusion splicing is performed under conditions suitable for the types of first optical fiber F1 and second optical fiber F2. Controller 3B controls operations of first driving portion 21 and second driving portion 22. The operations of first driving portion 21 and second driving portion 22 include the following three operations. One operation is an operation of bringing end face F1a of first optical fiber F1 and end face F2a of second optical fiber F2 close to each other. Another operation is an operation of adjusting a relative position between end face F1a and end face F2a in the XY plane (that is, axis alignment). Still another operation is an operation of adjusting a relative rotation angle θ between end face F1a and end face F2a. The process of the axis alignment of first optical fiber F1 and second optical fiber F2 by controller 3B is the same as that of controller 3A of the first embodiment.

First light source 51 irradiates resin sheath RS of first optical fiber F1 with a first light L1. First light L1 irradiated on resin sheath RS of first optical fiber F1 becomes observation light emitted from end face F1a of first optical fiber F 1. In one example, first light source 51 is provided so as to be in contact with first optical fiber F1 inside first holding portion 11. First light source 51 may be provided to press resin sheath RS of first optical fiber F1. The arrangement of first light source 51 is not limited thereto, and first light source 51 may be provided outside first holding portion 11. First light source 51 may be disposed away from first optical fiber F1. In this case, first light source 51 may cause first light L1 to be incident on a curved portion formed by bending first optical fiber F1. First light source 51 is configured such that a center wavelength of first light L1 is variable. In this case, first light source 51 may be configured such that a bandwidth of a wavelength of first light L1 is 100 nm or more. The configuration example of first light source 51 may be the same as the configuration example of light source 30 of the first embodiment (see FIGS. 5 and 6). Alternatively, in first light source 51, the center wavelength of first light L1 may be not variable but fixed. In this case, first light source 51 is configured such that the bandwidth of the wavelength of first light L1 is 100 nm or more, for example, 1000 nm or more. In one example, first light source 51 outputs broad light having a wavelength band of, for example, 400 nm to 2000 nm. In this case, the bandwidth of the wavelength of first light L1 is 1600 nm.

Second light source 52 irradiates resin sheath RS of second optical fiber F2 with a second light L2. Second light L2 irradiated on resin sheath RS of second optical fiber F2 becomes observation light emitted from end face F2a of second optical fiber F2. In one example, second light source 52 is provided so as to be in contact with second optical fiber F2 inside second holding portion 12. Second light source 52 may be provided to press resin sheath RS of second optical fiber F2. The arrangement of second light source 52 is not limited thereto, and second light source 52 may be provided outside second holding portion 12. Second light source 52 may be disposed away from second optical fiber F2. In this case, second light source 52 may cause second light L2 to be incident on a curved portion formed by bending second optical fiber F2. Second light source 52 is configured such that a center wavelength of second light L2 is variable. In this case, second light source 52 may be configured such that a bandwidth of a wavelength of second light L2 is 100 nm or more. The configuration example of second light source 52 may be the same as the configuration example of light source 30 of the first embodiment. Alternatively, in second light source 52, the center wavelength of second light L2 may be not variable but fixed. In this case, second light source 52 is configured such that the bandwidth of the wavelength of second light L2 is 100 nm or more, for example, 1000 nm or more. In one example, second light source 52 outputs broad light having a wavelength band of, for example, 400 nm to 2000 nm. In this case, the bandwidth of the wavelength of second light L2 is 1600 nm.

Imaging unit 60 is a camera that obtains an observed image of end face F1a of first optical fiber F1 and an observed image of end face F2a of second optical fiber F2. In the illustrated example, imaging unit 60 is arranged in a lateral direction (direction along the XY plane in FIG. 1) with respect to end faces F1a and F2a. Mirror 61 is disposed between end face F1a of first optical fiber F1 and end face F2a of second optical fiber F2. The angle of mirror 61 is adjusted along a swing direction A1 between an angle at which end face F1a of first optical fiber F1 is imaged by imaging unit 60 and an angle at which end face F2a of second optical fiber F2 is observed by imaging unit 60. In a state where mirror 61 is arranged so as to reflect the observation light from end face F1a of first optical fiber F1 toward imaging unit 60, imaging unit 60 outputs the observed image of end face F1a of first optical fiber F1. In a state where mirror 61 is arranged so as to reflect the observation light from end face F2a of second optical fiber F2 toward imaging unit 60, imaging unit 60 outputs the observed image of end face F2a of second optical fiber F2.

First light source 51, second light source 52, and imaging unit 60 are electrically connected to controller 3B. Controller 3B controls the output operation of first light L1 in first light source 51 and the output operation of second light L2 in second light source 52. In addition, controller 3B inputs, from imaging unit 60, the observed images of end faces F1a and F2a obtained by imaging unit 60. In these observed images, a plurality of cores CR irradiated with first light L1 and second light L2 are brightly displayed. Controller 3B adjusts the relative rotation angle θ between first optical fiber F1 and second optical fiber F2 based on the observed image of end face F1a and the observed image of end face F2a. In other words, controller 3B adjusts rotation angle θ of one or both of first optical fiber F1 and second optical fiber F2 based on the observed image of end face F1a and the observed image of end face F2a so that the positions of the plurality of cores CR of first optical fiber F1 in the XY plane and the positions of the plurality of cores CR of second optical fiber F2 in the XY plane coincide with each other.

Imaging unit 60 may be configured such that a center wavelength of a wavelength band for which imaging unit 60 has sensitivity is variable. In this case, the wavelength band for which imaging unit 60 has sensitivity may be set in accordance with the wavelength bands of first light L1 and second light L2 output from first light source 51 and second light source 52, respectively. In one example, the center wavelength of the wavelength band for which imaging unit 60 has sensitivity is set to coincide with the center wavelength of the wavelength band of first light L1 and second light L2 output from first light source 51 and second light source 52, respectively.

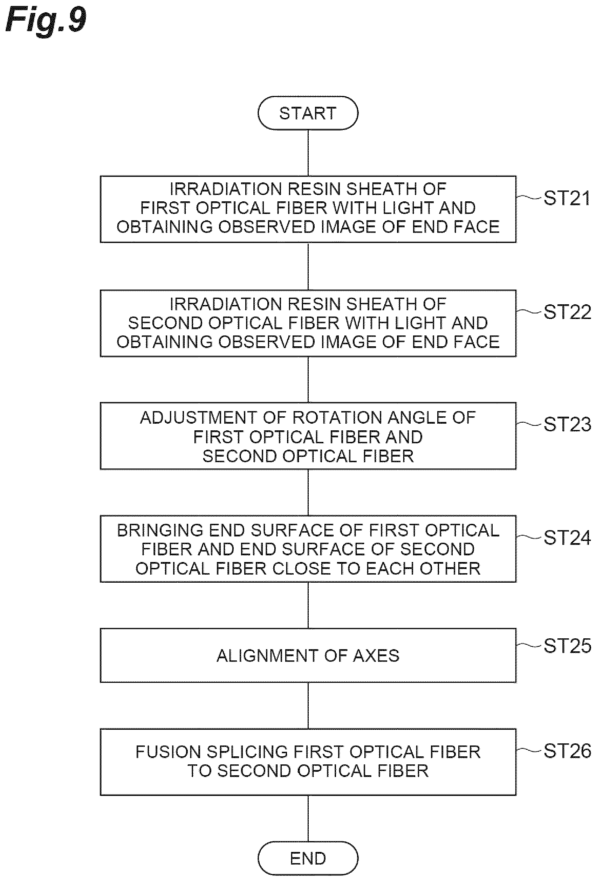

FIG. 9 is a flowchart showing an operation of fusion splicing apparatus 1B. With reference to FIG. 9, the method of fusion splicing according to the present embodiment will be described together with the operation of fusion splicing apparatus 1B. First, in step ST21, first light source 51, in which a center wavelength of output light is variable, irradiates resin sheath RS of first optical fiber F1 with first light L1. Alternatively, in step ST21, first light source 51 in which the center wavelength of the output light is fixed may irradiate resin sheath RS of first optical fiber F1 with first light L1 having a wavelength bandwidth of 100 nm or more. Then, while first light source 51 continues the irradiation of first light L1, imaging unit 60 obtains an observed image of end face F1a of first optical fiber F1. Next, in step ST22, second light source 52, in which a center wavelength of an output light is variable, irradiates resin sheath RS of second optical fiber F2 with second light L2. Alternatively, in step ST22, second light source 52 in which the center wavelength of the output light is fixed may irradiate resin sheath RS of second optical fiber F2 with second light L2 having a wavelength bandwidth of 100 nm or more. Then, while second light source 52 continues the irradiation of second light L2, imaging unit 60 obtains an observed image of end face F2a of second optical fiber F2.

In the subsequent step ST23, a relative rotation angle between first optical fiber F1 and second optical fiber F2 is adjusted based on the observed image of end face F1a of first optical fiber F1 and the observed image of end face F2a of second optical fiber F2. Then, in step ST24, controller 3B controls first driving portion 21 and second driving portion 22 so that end face F1a of first optical fiber F1 and end face F2a of second optical fiber F2 are brought close to each other. Thus, end faces F1a and F2a face each other. However, there is a slight clearance between end faces F1a and F2a. Next, in step ST25, the axes of first optical fiber F1 and second optical fiber F2 are aligned. Specifically, the vicinity of end faces F1a and F2a of first optical fiber F1 and second optical fiber F2 are imaged by using a camera disposed in a lateral direction with respect to end faces F1a and F2a. Then, controller 3B controls first driving portion 21 and second driving portion 22 so that the center axis lines of first optical fiber F1 and second optical fiber F2 included in the observed images coincide with each other. Thereafter, in step ST26, electric discharge is performed between the pair of arc electrodes 2 to heat and melt end face F1a of first optical fiber F1 and end face F2a of second optical fiber F2, thereby splicing end face F1a and end face F2a to each other.

Effects obtained by the fusion splicing apparatus and the method of fusion splicing of the present embodiment having the above-described configuration will be described. In fusion splicing apparatus 1B of the present embodiment, first light source 51 that irradiates resin sheath RS of first optical fiber F1 with first light L1 and second light source 52 that irradiates resin sheath RS of second optical fiber F2 with second light L2 are configured such that the center wavelengths of first light L1 and second light L2 are variable. In the method of fusion splicing of the present embodiment, resin sheaths RS of first optical fiber F1 and second optical fiber F2 are irradiated with first light L1 and second light L2, respectively, by using first light source 51 and second light source 52 in each of which the center wavelength of the output light is variable. As described above, the coloring materials and the particles contained in resin sheaths RS absorb or scatter first light L1 and second light L2 incident on resin sheaths RS, and the magnitudes of the absorptions and scatterings depend on the wavelengths of first light L1 and second light L2. According to fusion splicing apparatus 1B and the method of fusion splicing of the present embodiment, by selecting wavelengths at which absorptions and scatterings in resin sheaths RS are small and irradiating resin sheaths RS of first optical fiber F1 and second optical fiber F2 with first light L1 and second light L2 of the wavelengths, respectively, first light L1 and second light L2 easily pass through resin sheaths RS and reach glass parts GL. Thus, according to the present embodiment, the observed images of end face F1a of first optical fiber F1 and end face F2a of second optical fiber F2 can be made brighter, and rotation angles θ can be suitably adjusted. The wavelengths of first light L1 and second light L2 may be automatically changed by controller 3B according to the types of first optical fiber F1 and second optical fiber F2 input before the fusion splicing. Alternatively, the wavelengths of first light L1 and second light L2 may be changed by an operator through an input unit such as a switch provided in fusion splicing apparatus 1B.

As described above, first light source 51 and second light source 52 may be configured such that the wavelength bandwidth of each of first light L1 and second light L2 is 100 nm or more. By using first light L1 and second light L2 each having such a broad band, rotation angles θ of a plurality of types of optical fibers having different absorption characteristics and scattering characteristics of resin sheaths RS can be adjusted without changing wavelength of light. Thus, the frequency of changing the wavelengths of first light L1 and second light L2 can be reduced, and the time and effort of the operator can be reduced.

As described above, imaging unit 60 may be configured such that the center wavelength of the band for which imaging unit 60 has sensitivity is variable. In this case, first light L1 and second light L2 can be imaged with optimal sensitivity corresponding to the wavelengths of first light L1 and second light L2, and the observed images of end faces F1a and F2a of first optical fiber F1 and second optical fiber F2 can be made brighter, and rotation angles θ can be adjusted more accurately.

As described above, first light source 51 and second light source 52 may be configured such that the center wavelengths of first light L1 and second light L2 are not variable but fixed, and the bandwidths of the wavelengths of first light L1 and second light L2 are 100 nm or more. Also in steps ST21 and ST22 of the method of fusion splicing of the present embodiment, resin sheaths RS of first optical fiber F1 and second optical fiber F2 may be irradiated with first light L1 and second light L2 each having a wavelength bandwidth 100 nm or more, respectively, by using first light source 51 and second light source 52 in which the center wavelengths of first light L1 and second light L2 are not variable but fixed. As described above, the coloring materials and the particles contained in resin sheaths RS absorb or scatter first light L1 and second light L2 incident on resin sheaths RS, and the magnitudes of the absorptions and scatterings depend on the wavelengths of first light L1 and second light L2. By using first light L1 and second light L2 each having a broad band whose bandwidth is 100 nm or more, at least one of the wavelength components included in the band, typically, the wavelength component that is absorbed and scattered the least in the band, easily reaches glass part GL through resin sheath RS. Thus, the observed images of end faces F1a and F2a of first optical fiber F1 and second optical fiber F2 can be made brighter, and rotation angles θ can be can be suitably adjusted.

In the present embodiment, first light source 51 may be configured such that intensity of first light L1 with which resin sheath RS of first optical fiber F1 is irradiated is variable. Similarly, second light source 52 may be configured such that intensity of second light L2 with which resin sheath RS of second optical fiber F2 is irradiated is variable. In these cases, the intensities of first light L1 and second light L2 can be easily adjusted. For example, when the intensities of first light L1 and second light L2 incident on imaging unit 60 exceed the maximum light amount allowed in imaging unit 60, the intensities of first light L1 and second light L2 can be decreased. When the intensities of first light L1 and second light L2 incident on imaging unit 60 are too small, intensities of first light L1 and second light L2 can be increased. Thus, the intensity of first light L1 emitted from end face F 1a of first optical fiber F1 and the intensity of second light L2 emitted from end face F2a of second optical fiber F2 are appropriately adjusted, and the observed image of end face F1a of first optical fiber F1 and the observed image of end face F2a of second optical fiber F2 can be appropriately obtained. Thus, rotation angles θ can be suitably adjusted. Controller 3B may automatically change the intensities of first light L1 and second light L2 based on the intensities of first light L1 and second light L2 incident on imaging unit 60. Alternatively, the intensities of first light L1 and second light L2 may be changed by an operator through an input unit such as a switch provided in fusion splicing apparatus 1B.

The fusion splicing apparatus and the method of fusion splicing according to the present disclosure are not limited to the above-described embodiments, and various modifications are possible. For example, the embodiments described above may be combined with each other according to the required purpose and effect. In the second embodiment, a common imaging unit 60 is provided for imaging of end face F1a of first optical fiber F1 and imaging of end face F2a of second optical fiber F2. An imaging unit for imaging of end face F1a and an imaging unit for imaging of end face F2a may be provided separately. In this case, mirror 61 is not required.

### Reference Signs List

1A, 1B fusion splicing apparatus
2 arc electrode
3A, 3B controller
11 first holding portion
12 second holding portion
21 first driving portion
22 second driving portion
30, 30A, 30B light source
31, 32 light-emitting device
33 wavelength variable filter
40 photodetector
51 first light source
52 second light source
60 imaging unit
61 mirror
111, 121 V-groove
112, 122 base
113, 123 cover
A1 swing direction
CL common cladding
CR core
F1 first optical fiber
F1a end surface
F2 second optical fiber
F2a end surface
GL glass part
GL1, GL2 tip portion
L light
L1 first light
L2 second light
MK marker
RS resin sheath
θ rotation angle

## Claims

1. A fusion splicing apparatus comprising:
a first holding portion configured to allow variation of a rotation angle of an end surface of a first optical fiber about a center axis line of the first optical fiber in a state in which the first holding portion holds the first optical fiber, the first optical fiber including a glass part and a resin sheath surrounding an outer periphery of the glass part, the glass part including one or a plurality of cores and a cladding surrounding the one or plurality of cores, the glass part including a tip portion exposed from the resin sheath, the tip portion including the end surface;
a second holding portion configured to allow variation of a rotation angle of an end surface of a second optical fiber about a center axis line of the second optical fiber in a state in which the second holding portion holds the second optical fiber, the second optical fiber including a glass part and a resin sheath surrounding an outer periphery of the glass part, the glass part including one or a plurality of cores and a cladding surrounding the one or plurality of cores, the glass part including a tip portion exposed from the resin sheath, the tip portion including the end surface;
a light source configured to irradiate the resin sheath of the first optical fiber with light and configured such that the light source has one or both of a feature in which a center wavelength of the light is variable and a feature in which a bandwidth of a wavelength of the light is 100 nm or more;
a photodetector configured to detect intensity of the light leaking from the second optical fiber by passing through the resin sheath in a state in which the end surface of the first optical fiber and the end surface of the second optical fiber are close to each other; and
a heater configured to heat the end surface of the first optical fiber and the end surface of the second optical fiber to melt the end surface of the first optical fiber and the end surface of the second optical fiber in a state in which the end surface of the first optical fiber and the end surface of the second optical fiber are brought close to each other.

2. The fusion splicing apparatus according to claim 1,
wherein the photodetector is configured such that a center wavelength of a band for which the photodetector has sensitivity is variable.

3. A fusion splicing apparatus comprising:
a first holding portion configured to allow variation of a rotation angle of an end surface of a first optical fiber about a center axis line of the first optical fiber in a state in which the first holding portion holds the first optical fiber, the first optical fiber including a glass part and a resin sheath surrounding an outer periphery of the glass part, the glass part including one or a plurality of cores and a cladding surrounding the one or plurality of cores, the glass part including a tip portion exposed from the resin sheath, the tip portion including the end surface;
a second holding portion configured to allow variation of a rotation angle of an end surface of a second optical fiber about a center axis line of the second optical fiber in a state in which the second holding portion holds the second optical fiber, the second optical fiber including a glass part and a resin sheath surrounding an outer periphery of the glass part, the glass part including one or a plurality of cores and a cladding surrounding the one or plurality of cores, the glass part including a tip portion exposed from the resin sheath, the tip portion including the end surface;
a first light source configured to irradiate the resin sheath of the first optical fiber with first light and configured such that the first light source has one or both of a feature in which a center wavelength of the first light is variable and a feature in which a bandwidth of a wavelength of the first light is 100 nm or more;
a second light source configured to irradiate the resin sheath of the second optical fiber with second light and configured such that the second light source has one or both of a feature in which a center wavelength of the second light is variable and a feature in which a bandwidth of a wavelength of the second light is 100 nm or more;
an imaging unit configured to obtain an observed image of each of the end surface of the first optical fiber and the end surface of the second optical fiber; and
a heater configured to heat the end surface of the first optical fiber and the end surface of the second optical fiber to melt the end surface of the first optical fiber and the end surface of the second optical fiber in a state in which the end surface of the first optical fiber and the end surface of the second optical fiber are brought close to each other.

4. The fusion splicing apparatus according to claim 3,
wherein the imaging unit is configured such that a center wavelength of a band for which the imaging unit has sensitivity is variable.

5. The fusion splicing apparatus according to claim 1 or claim 2,
wherein the light source is configured such that intensity of the light with which the resin sheath of the first optical fiber is irradiated is variable.

6. The fusion splicing apparatus according to claim 3 or claim 4,
wherein the first light source is configured such that intensity of the first light with which the resin sheath of the first optical fiber is irradiated is variable, and
wherein the second light source is configured such that intensity of the second light with which the resin sheath of the second optical fiber is irradiated is variable.

7. A method of fusion splicing, the method comprising:
preparing a first optical fiber and a second optical fiber each including a glass part and a resin sheath surrounding an outer periphery of the glass part, the glass part including one or a plurality of cores and a cladding surrounding the one or plurality of cores, the glass part including a tip portion exposed from the resin sheath, the tip portion including an end surface;
bringing the end surface of the first optical fiber and the end surface of the second optical fiber close to each other;
irradiating the resin sheath of the first optical fiber with light by using a light source configured such that the light source has one or both of a feature in which a center wavelength of output light is variable and a feature in which a wavelength bandwidth of the output light is 100 nm or more;
detecting intensity of the light leaking from the second optical fiber by passing through the resin sheath;
adjusting a relative rotation angle between the first optical fiber and the second optical fiber based on the intensity of the light detected in the detecting; and
heating and melting the end surface of the first optical fiber and the end surface of the second optical fiber.

8. The method of fusion splicing according to claim 7,
wherein a photodetector configured such that a center wavelength of a band for which the photodetector has sensitivity is variable is used in the detecting to detect intensity of the light.

9. A method of fusion splicing, the method comprising:
preparing a first optical fiber and a second optical fiber each including a glass part and a resin sheath surrounding an outer periphery of the glass part, the glass part including one or a plurality of cores and a cladding surrounding the one or plurality of cores, the glass part including a tip portion exposed from the resin sheath, the tip portion including an end surface;
obtaining an observed image of the end surface of the first optical fiber while irradiating the resin sheath of the first optical fiber with first light by using a first light source configured such that the first light source has one or both of a feature in which a center wavelength of output light is variable and a feature in which a wavelength bandwidth of the output light is 100 nm or more;
obtaining an observed image of the end surface of the second optical fiber while irradiating the resin sheath of the second optical fiber with second light by using a second light source configured such that the second light source has one or both of a feature in which a center wavelength of output light is variable and a feature in which a wavelength bandwidth of the output light is 100 nm or more;
adjusting a relative rotation angle between the first optical fiber and the second optical fiber based on the observed image of the end surface of the first optical fiber and the observed image of the end surface of the second optical fiber;
bringing the end surface of the first optical fiber and the end surface of the second optical fiber close to each other; and
heating and melting the end surface of the first optical fiber and the end surface of the second optical fiber.

10. The method of fusion splicing according to claim 9,
wherein an imaging device configured such that a center wavelength of a band for which the imaging device has sensitivity is variable is used in each of the obtaining the observed image of the end surface of the first optical fiber and the obtaining the observed image of the end surface of the second optical fiber to obtain each of the observed image of the end surface of the first optical fiber and the observed image of the end surface of the second optical fiber.

11. The method of fusion splicing according to claim 7 or claim 8,
wherein the light source configured such that intensity of the light with which the resin sheath of the first optical fiber is irradiated is variable is used in the irradiating to perform irradiation with the light.

12. The method of fusion splicing according to claim 9 or claim 10,
wherein the first light source configured such that intensity of the first light is variable is used in the obtaining the observed image of the end surface of the first optical fiber to perform irradiation with the first light, and
wherein the second light source configured such that intensity of the second light is variable is used in the obtaining the observed image of the end surface of the second optical fiber to perform irradiation with the second light.
